# EUROPEAN PATENT SPECIFICATION

(11) **EP 2 222 794 B1**
(45) Date of publication and mention of the grant of the patent: **23.11.2011**
(21) Application number: 08860624.9
(22) Date of filing: 03.12.2008
(51) Int. Cl.: C09C 1/36

(54) **PROCESS FOR THE PRODUCTION OF COATED TITANIUM DIOXIDE PIGMENTS**
VERFAHREN ZUR HERSTELLUNG BESCHICHTETER TITANDIOXIDPIGMENTE
PROCÉDÉ DE FABRICATION DE PIGMENTS À BASE DE DIOXYDE DE TITANE ENDUIT

(30) Priority: 05.12.2007 US 950848
(43) Date of publication of application: 01.09.2010
(73) Proprietor: Millennium Inorganic Chemicals, Inc., Hunt Valley, MD 21030 (US)
(72) Inventor: Akhtar, Kamel, Ellicott City, MD 21042 (US); Banerjee, Sibashis, Hendon, VG 20170 (US)
(74) Representative: Carpmaels & Ransford
(86) International application number: PCT/US2008/013300
(87) International publication number: WO 2009/075748

(56) References cited:
- WO-A1-96/36441
- US-A- 4 375 989
- US-A- 5 922 120
- US-A1- 2001 041 217
- US-B2- 6 773 814
- US-B2- 7 029 648
- US-B2- 7 244 302

## Description

### FIELD OF THE INVENTION

The present invention relates generally to a method of producing pigment particles. More particularly, the invention relates to a high temperature gas-phase process for the production of titania pigment particles coated with a metal oxide layer.

### BACKGROUND OF THE INVENTION

Titanium dioxide (TiO₂) is an important pigment in the manufacture of paints, plastics, and coatings. There has been a considerable research effort to make titanium dioxide pigments with desirable properties (i.e., particle size, gloss and durability).

One method of manufacturing titanium dioxide is by reacting titanium tetrachloride (TiCl₄) with oxygen. This reaction is initiated by heating the gaseous reactants (TiCl₄ and oxygen) to temperatures typically between 650° C and 1200° C. U.S. Patent Nos. 5,599,519 to Haddow; 4,803,056 and 5,840,112 to Morris et al.; and 3,463,610 to Groves et al.; and British Patent No. GB 2,037,266 to Du Pont, describe that the heating requirements can be reduced by using multi-stage introduction of TiCl₄ or oxygen into the reaction zone.

Pigment properties can be modified by the addition of other components such as different metal oxides to the gas phase reaction of TiCl₄ and oxygen. For example, U.S. Patent No. 3,505,091 to Santos discloses the addition of aluminum trichloride (AlCl₃) with TiCl₄ to promote rutile titanium dioxide formation. AlCl₃ addition alters the surface chemistry of titanium dioxide; enriching the surface of the titanium dioxide with aluminum (present as the oxide and/or titanate). In contrast, increasing the concentration of SiCl₄ in the gas phase production of titania is known to affect the form of the titania produced by inhibiting the phase transformation of the anatase form to the rutile form.

The gas phase reaction between TiCl₄ and oxygen is highly exothermic and temperatures of the reaction mass may range between about 1200 °C and about 2000°C. These high temperatures can lead to undesired growth and agglomeration of titanium dioxide particles, reducing pigmentary value. This undesired growth of titanium dioxide is exacerbated at high production rates, high temperatures, and high pressures.

In conventional manufacturing processes, the undesired growth of titanium dioxide is prevented by rapidly cooling the reaction mass to below 600°C. This is accomplished by passing the reaction products through a conduit or "flue" which is externally cooled by water. The hot pigment tends to stick to the flue walls causing a build up. This build up can be reduced or eliminated by introducing scouring particles or scrubs materials. Some examples of scrubs material include NaCl, KCl, sand, and the like. The cooled titanium dioxide is separated from the gases by filtration and then dispersed in water for further processing.

TiO₂ dioxide pigment properties, such as iron oxide undertone (IOU) and gloss, are a function of particle size distribution and particle agglomeration, respectively. When highly agglomerated TiO₂ is formed, it must be milled in an expensive, energy-intensive process such as sand-milling or micronizing to achieve the desired particle size. The energy consumption and intensity of grinding or milling agglomerates depends not only on the number of agglomerates present but also on their strength, that is, how strongly the primary or individual titanium dioxide particles are bonded to each other.

One way to reduce particle size and agglomerates is to add a silicon halide to the TiO₂ formation reaction (e.g., silicon tetrachloride). The reaction between silicon tetrachloride (SiCl₄) and oxygen results in the formation of silica. Silica reduces the sintering rate of titania and results in smaller particles and fewer agglomerates with weak bonds.

Unfortunately, silicon halide addition promotes unwanted anatase formation in titanium dioxide. Out of the two commercially significant crystal forms of titanium dioxide (i.e., anatase and rutile), the anatase form is photochemically more active and hence, less durable. Even 1% anatase in rutile titanium dioxide is detrimental to the durability of the pigment or the substrate in which the pigment is ultimately dispersed. The futile form has a higher refractive index than the anatase form, and is therefore preferred in pigmentary applications for this additional reason. In many commercial applications, such as paints, high durability, or the ability to withstand the destructive effects of weather and sunlight is required. Thus, it is desirable to produce essentially anatase-free titanium dioxide with a rutile content of at least 99.8% or higher.

The anatase promoting effect of silicon compounds has been countered in the prior art by using high levels of aluminum chloride. For example, TiCl₄ is premixed with silicon species and volatile alumina (i.e., AlCl₃) before entering the reaction zone. It takes temperatures of between 1000° C and 1200° C to form about 90% rutile titanium dioxide in this process. However, aluminum halide consumption is increased causing a higher production cost.

Premixing SiCl₄ and AlCl₃ with TiCl₄ to make high surface area titania in hydrogen flames has been previously described. United States Patent No. 7,083,769 to Moerters et al., describes silicon-titanium mixed oxide powders prepared by a flame hydrolysis process. The process described comprises introducing separate streams of TiCl₄ and a silica precursor into the burner at the same time. The mixed oxide produced is disclosed to be an intimate mixture of titanium dioxide and silicon dioxide on an atomic level with the formation of Si-O-Ti bonds. The surface of the particles is disclosed to be enriched with silicon.

United States Patent No. 6,328,944 to Mangold et al., describes doped metal oxides or non-metal oxides prepared by a process which comprises feeding aerosols into the flame of a pyrogenic reactor. The doping component, which may be SiCl₄, is introduced separately into the flame compartment and the aerosol and SiCl₄ are homogenously mixed before reaching the combustion chamber.

United States Patent Nos. 3,434,799 to Wilson et al., 3,208,616 to Haskins et al., and 5,201,949 to Allen et al*.* describe improving particle size and titania tint tone by separately adding between 0.01 and 8% SiCl₄ to the TiCl₄ stream and between 0.00001 and 4% alkali salt to the oxygen stream. Some silicon sources used are silicon halides, silanes, alkylalkoxysilanes, alkylsilic esters or ethers, and derivatives of silicic acid.

To impart greater durability the surface of titania particles can be passivated by depositing a coating of another metal oxide to lower the photoactivity of the titania particles and prevent the photocatalytic decomposition of substances that incorporate the titania particles. Coatings can reduce the generation of free radicals by physically inhibiting oxygen diffusion, preventing the release of free radicals and providing hole-electron or hydroxyl-radical recombination sites (Allen et al., 2005). Furthermore, coatings can also improve wetting and dispersion properties of the particles in an organic matrix (Egerton, 1998; Allen et al., 2005).

Typically hydrous oxide coatings on TiO₂ particles are prepared by wet chemical methods. These involve precipitation of the hydrous oxide, such as silica, alumina, zirconia, from solution onto the surface of the TiO₂ particles. While these processes do provide somewhat durable coatings on the TiO₂ particles, they often result in uneven, non-uniform and porous coatings. These processes also often require milling of the pigment prior to the wet coating methods to break up soft aggregates to assure all particles are coated. Silica coating of titania is particularly attractive because this coating yields maximum durability of the coated material. However, this is also accompanied by loss of opacity as a result of agglomeration during wet-phase treatment. Wet dispersion of the starting powder, filtration, washing and drying add to production time and cost. Furthermore, the control of the coating morphology is difficult in the wet precipitation process. Rough and porous coatings are often obtained where complete and homogeneous coatings are desired for optimum durability and a maximum reduction of photoactivity of the titania. Further, these processes require substantial investment in equipment, involve time consuming, often complicated operations, and generate volumes of aqueous wastes.

*In-situ* gas-phase processes have been investigated as alternative coating routes either in aerosol flow (Piccolo et al., 1977) or flame reactors (Hung and Katz, 1992). In flame reactors SiO₂ coated TiO₂ can be formed by co-oxidation of silica and titanium precursors (Hung and Katz, 1992; Teleki et al., 2005). The product powder morphology is a result of simultaneous growth of the two oxides in the flame and can be controlled by precursor concentration and flame temperature (Hung and Katz, 1992). In a diffusion flame rapid cooling of particle growth by nozzle quenching (Wegner and Pratsinis, 2003) facilitated the formation of smooth silica coatings while in the unquenched flame mainly particles segregated in silica and titania were formed (Teleki et al., 2005). In aerosol flow.reactors coating precursors can be added downstream a TiO₂ particle formation zone to produce oxide coatings on the titania nanoparticles (Kodas et al., 1996; Powell et al., 1997). The key process parameters controlling coating morphology are temperature and coating precursor concentration (Powell et al., 1997) as well as the mixing mode of titania particles and coating precursor (Lee et al., 2002).

United States Patent No. 5,562,764 to Gonzalez describes a process for producing substantially anatase-free TiO₂ by addition of a silicon halide to the reaction product of TiCl₄ and an oxygen containing gas in a plug flow reactor. The silicon halide is added downstream of where the TiCl₄ and oxygen gas are reacted. The patent describes a process to produce pigmentary grade TiO₂. The TiCl₄ is added to the process at a temperature of about 1200°C to about 1600°C and a pressure of 34.5 - 689.5 kPa (5-100 psig). Only silicon halides are used in the process.

International Application Publication No. WO 96/36441 to Kemira Pigments, Inc. describes a process for making pigment grade TiO₂ coated with a metal oxide in a tubular flow reactor. The metal oxide precursor is introduced downstream of the TiO₂ formation zone. The publication discloses that the temperature for treating TiO₂ with a silica precursor must be sufficiently high to ensure that the precursor forms SiO₂. The publication discloses that for coating TiO₂ with SiO₂ using SiCl₄ the temperature must be greater than 1300°C.

United States Patent No. 6,562,314 to Akhtar et al. describes a process for the production of substantially anatase-free TiO₂ by introducing a silicon compound into the TiCl₄ stream to form an admixture before the reaction with oxygen. The process is conducted under pressure and the titania is not coated with silica.

United States Patent Nos. 6,852,306 and 7,029,648 to Subramanian et al. describe a process to produce TiO₂ pigment particles coated with silica in a tubular flow reactor. The TiCl₄ is introduced downstream of the TiO₂ formation zone at a temperature no greater than 1200°C. The coating produced by this process consists of an approximately 1:1 mixture of amorphous aluminum oxide and silicon dioxide by weight (1% Al₂O₃ and 1.2% SiO₂). Only silicon halides are used as the metal oxide precursor.

United States Patent No. 5,922,120 to Subramanian et al. describes a process for producing titanium dioxide pigment having a coating comprising silica and a second oxide. The coating is applied by contacting the TiO₂ with a silicon halide and a second metal oxide precursor downstream of the TiO₂ formation zone.

There remains a need for a process for making a durable substantially anatase-free TiO₂ pigment, particularly one having a controlled particle size distribution with a homogeneous uniform coating of a metal oxide without the presence of separate particles of the coating component or the formation of agglomerates. The present invention provides such a process.

### SUMMARY OF THE INVENTION

Provided is a process for the preparation of substantially anatase-free titanium dioxide with reduced particle size comprising a uniform and homogeneous coating of a metal oxide.

One aspect of the present invention provides a process comprising introducing a titanium dioxide precursorfeed into the reaction zone of a reactor and reacting the precursor with oxygen in the reaction zone at a pressure of between about 34.5 kPa (5 psig) and about 689.5 kPa (100 psig). The TiO₂ which is formed in the reaction zone of the process is further contacted with a metal oxide coating precursor compound, which is homogeneously mixed with a solvent component. The TiO₂ is contacted with the metal oxide coating precursor compound downstream of the reaction zone, to produce TiO₂ that is coated with a uniform, homogenous metal oxide layer. The titanium dioxide precursor is typically, but not necessarily, a titanium halide, such as TiCl₄.

In one embodiment according to this aspect of the invention, the process for the preparation of substantially anatase-free titanium dioxide particles comprising a uniform homogeneous coating of a metal oxide on the surface of the titanium oxide particles comprises:
(a) introducing a titanium dioxide precursor, preferably TiCl₄, and oxygen into a reaction zone of a reactor to produce substantial anatase-free TiO₂, wherein the reaction zone is at a pressure of between about 34.5 kPa (5 psig) to about 689.5 kPa (100 psig); and .
(b) contacting the substantially anatase-free TiO₂ particles with a metal oxide precursor homogeneously mixed in a solvent component, the contact occurring downstream of the reaction zone, to thereby form coated titanium dioxide particles with a uniform, homogeneous metal oxide coating, wherein separate particles of the metal oxide coating are not produced; and
(c) isolating the coated titanium dioxide particles.

In one variant according to the process, a silicon compound, typically a silicon halide such as silicon tetrachloride, is mixed with the titanium dioxide precursor to form an admixture prior to introducing the titanium dioxide precursor into the reaction zone.

Surprisingly, it has been found that the substantially anatase-free TiO₂ produced by the process is, in some embodiments, at least 99.9% rutile TiO₂.

In one embodiment of the invention, the reaction zone pressure is preferably between about 275.8 kPa (40 psig) to about 689.5 kPa (100 psig) or more preferably between about 275.8 kPa (40 psig) to about 482.6 kPa (70 psig).

The temperature of the reaction zone of the process where the TiO₂ precursor is reacted with oxygen can be varied to achieve optimum conversion of the TiO₂ precursor to TiO₂. In one embodiment of the invention, the reaction zone of the process has a temperature of between about 850°C to about 1600°C. In another embodiment, the reaction zone is at a temperature of between about 1000°C to about 1300°C. In still another embodiment, the reaction zone temperature is about 1200°C.

The amount of silicon tetrachloride mixed with the TiO₂ precursor, may be varied depending on the total amount of SiO₂ desired in the TiO₂ particles. In one embodiment, the amount of silicon tetrachloride mixed with TiCl₄ produces TiO₂ with between about 0.05% to about 0.5% SiO₂ by weight of the TiO₂ product.

In other embodiments of the invention, additional compounds may be mixed with the titanium dioxide precursor, which may be TiCl₄. For example, an aluminum halide, such as aluminum trichloride, may be added to an admixture of TiCl₄ and a silicon compound before reacting the admixture with oxygen.

The process of the invention may be practiced in reactors that comprise one reaction zone or multiple reaction zone stages where a TiO₂ precursor and other metal oxide precursors are reacted with oxygen.

Another aspect of the invention provides a process comprising contacting the TiO₂ particles that are formed in the reaction zone of the reactor with a metal oxide precursor that is homogeneously mixed with a solvent (or mixing) component to form a uniform and homogeneous metal oxide coating on the TiO₂ particles. The metal oxide coating of the TiO₂ particles may comprise a metal oxide selected from the group consisting of SiO₂, Al₂O_{3,} B₂O₃, ZrO₂, GeO₂, MgO, ZnO and SnO₂.

In one embodiment, the coating will comprise SiO₂. In this case, the metal oxide precursor may be any compound that produces SiO₂ when contacted with the TiO₂ particles. In one embodiment, the silica precursor is selected from the group consisting of silicon halides hexaalkyldisiloxanes, tetraalkylorthosilicates and silanes. In a particular embodiment, the silica precursor is a silicon halide such as silicon tetrachloride.

The solvent component used with the metal oxide precursor may be any liquid or gas that is inert to the reactor components. For example, the solvent component must not be reactive with TiO₂, the metal oxide precursor or oxygen. In one embodiment, the solvent component is selected from the group consisting of a liquid halide (e.g., F₂, Cl₂, Br₂, I₂, and combinations thereof), a halide gas, liquid carbon dioxide, carbon dioxide gas, nitrogen gas and argon gas. In a particular embodiment, the solvent component is liquid chlorine (Cl₂).

The homogeneous mixture of the metal oxide coating precursor and the solvent component are introduced into the coating zone of the reactor, which is downstream of the reaction zone, after the TiO₂ particles have been formed so that the characteristics of the TiO₂ particles are not affected by the metal oxide coating. In one embodiment, the TiO₂ particles are contacted with the metal oxide precursor at a point downstream of the reaction zone where at least 90%, preferably at least 95%, of the titanium dioxide precursor compound, such as TiCl₄, has reacted to form TiO₂ particles.

The process described herein produces TiO₂ particles with a uniform, homogeneous coating of a metal oxide without the formation of separate metal oxide particles. The amount of metal oxide precursor added to the process in the coating zone controls the thickness of the metal oxide coating layer. In one embodiment, the amount of metal oxide precursor added produces TiO₂ with between about 1% to about 5% or about 10% SiO₂ by weight of the TiO₂ product, depending on the desired thickness. There is essentially no limitation on the thickness of the metal oxide coating on the TiO₂ particles, but it will typically be between about 1 nm to about 10 nm thick, more typically between about 2 nm to about 6 nm thick. The process of the invention produces TiO₂ particles with a particle size typically between about 50 nm to about 500 nm, more typically, between about 100 nm to about 400 nm or between 100 nm to about 300 nm.

The TiO₂ pigment produced by the present invention has a improved particle size distribution, by which is meant a more narrow range of particle sizes about the median, and improved durability as a result of the uniform, homogenous coating of a metal oxide. The introduction of the metal oxide precursor downstream of the TiO₂ formation in a solvent component greatly improves the mixing of the metal oxide precursor and the TiO₂ particles and provides a uniform and homogeneous coating of the metal oxide without the formation of separate metal oxide particles.

The invention will be better understood by reference to the following detailed description, including the drawings.

### BRIEF DESCRIPTION OF THE DRAWINGS

Figure 1 is a plot showing the standard deviation of nitrogen distribution as a factor of distance along the reactor.

Figure 2 is a plot depicting the effect of nitrogen flow rate on mixing and specific surface area of TiO₂ particles.

Figure 3 shows a TEM image of SiO₂ coated TiO₂ produced with a nitrogen flow rate of 5 Umin in which separate particles of SiO₂ are visible.

Figure 4 shows a TEM image of SiO₂ coated TiO₂ produced with a nitrogen flow rate of 10 Umin in which separate particles of SiO₂ are visible.

Figure 5 shows a TEM image of image of SiO₂ coated TiO₂ produced with a nitrogen flow rate of 20 Umin showing only coated TiO₂ particles.

### DETAILED DESCRIPTION OF THE INVENTION

Provided is a process for the preparation of substantially anatase-free titanium dioxide with reduced particle size comprising a uniform and homogeneous coating of a metal oxide. The process described herein comprises reacting a titanium dioxide precursor with oxygen in the reaction zone of a reactor at a pressure of between about 34.5 kPa (5 psig) to about 689.5 kPa (100 psig). In other embodiments, the pressure is between about 275.8 kPa (40 psig) to about 689.5 kPa (100 psig) or about 275.8 kPa (40 psig) to about 482.6 kPa (70 psig). In some embodiments of the invention, the titanium dioxide precursor is mixed with one or more dopants prior to reacting with oxygen. The TiO₂ which is formed in the reaction zone of the process is further contacted with a metal oxide precursor, which is homogeneously mixed in a solvent component, such as liquid chlorine, downstream of the reaction zone to produce TiO₂ that is coated with a uniform and homogenous metal oxide layer. Separate particles of the metal oxide coating component that are not part of the coating layer are not formed with the present invention. The process reduces the amount of the metal oxide coating precursor and reduces or eliminates the requirement for scrubs, without increasing the operating temperature. The coated TiO₂ formed is substantially free of the anatase form, has a smaller particle size and results in improved iron oxide undertone (IOU) and gloss. These coated pigments are useful in a variety of applications, including use in pigments, and in polymer composite compositions.

Definitions

The term "psig" is an abbreviation for "pounds per square inch gauge", a unit of pressure relative to atmospheric pressure at sea level.

The term "primary titania particles" or "primary particles" refers to the titania particles formed in the reaction zone of the process before a second coating component has been introduced. The terms refer to individual particles rather than agglomerates of particles.

The terms "specific surface area" or "SSA" refer to the surface area per mass of a material. The units of specific surface area used herein are m²/g, or square meters per gram. The terms "metal oxide precursor" or "coating precursor" refer to a compound that produces a metal oxide upon contact with titanium dioxide particles.

The term "reaction zone" is used to refer to the point or position in the process where TiCl₄ is reacted with oxygen to form TiO₂.

The term "coating zone" is used to refer to the point or position in the process where the metal oxide precursor comes in contact with the pre-formed TiO₂ particles and results in the formation of a metal oxide coating on the TiO₂ particles.

The term "doped" refers to TiO₂ particles that comprise other metal oxides in the primary particle. For example, the term "aluminum-doped" refers to TiO₂ particles that comprise aluminum oxide in the particles.

The term "halo" or "halogen", as used herein, includes chloro, bromo, iodo, and fluoro.

The term "silyl halide" refers to a mono-, di-, tri- or tetra-halo silicon species, for example SiCl₄.

The term "silane" refers to a tetravalent silicon compound, for example SiH₄ or Si(CH₃)₄.

The term "alkyl" is intended to have its customary meaning, and includes straight, branched, or cyclic, primary, secondary, or tertiary hydrocarbon, including but not limited to groups with C₁ to C₁₀.

The term "aryl" is intended to have its customary meaning, and includes any stable monocyclic, bicyclic, or tricyclic carbon ring(s) comprising up to 8 members in each ring (typically 5 or 6), wherein at least one ring is aromatic as defined by the Huckel 4n+2 rule, and includes phenyl, biphenyl, or naphthyl.

The term "alkoxy" refers to any moiety of the form -OR, where R is an alkyl group, as defined above.

The term "homogeneous coating" as used herein referring to a coating means a metal oxide coating that comprises greater than about 75% of one metal oxide, preferably greater than about 85% of one metal oxide or more preferably greater than about 95% of one metal oxide.

The term "metal oxide" is intended to embrace oxides of metalloid elements, including without limitation oxides of boron, silicon, germanium, arsenic, antimony, and the like. Thus, silicon dioxide (SiO₂) is referred to herein as a metal oxide.

The term "uniform coating" as used herein to refer to a coating of a metal oxide on titania particles as used herein, means a coating of a metal oxide on the surface of titania particles that does not contain segregated areas of amorphous and crystalline content of the metal oxide and does not contain areas of the particle surface that do not have a discernable metal oxide coating using the analytical techniques described herein.

The term "solvent component" as used herein refers to a gas or liquid component that is inert to the process compounds and is homogeneously mixed with a metal oxide precursor used to form a metal oxide coating layer on the TiO₂ particles. The solvent component is used to provide the energy to assist in the mixing of the coating precursor with the stream containing the TiO₂ particles.

Particles size measurements or ranges herein refer to an average particle size of a representative sample.

Processes for producing titanium dioxide pigment by reacting TiCl₄ and oxygen in the vapor phase in the reaction zone of a reactor are well known to those skilled in the art. The reaction between TiCl₄ and oxygen at elevated temperatures is extremely fast and exothermic, yielding titanium dioxide particles. This reaction between TiCl₄ and oxygen occurs in at least one reaction zone in a reaction vessel.

The present invention is not limited to the use of TiCl₄ to form TiO₂. Other titanium compounds that form TiO₂ upon reaction with oxygen may be used. Titanium dioxide precursors are titanium-containing compounds that form titanium dioxide when subjected to high temperatures in the presence of oxygen. Although the process of the invention is not limited by choice of a particular titanium dioxide precursor, suitable titanium compounds useful in the invention include, but are not limited to, titanium alkoxides and titanium halides. Preferred titanium alkoxides are titanium tetraisopropoxide, titanium tetraethoxide and titanium tetrabutoxide. Titanium halides include titanium trichloride and titanium tetrachloride. In a particular embodiment of the invention, TiCl₄ is used as a TiO₂ precursor.

Different reactor configurations with multiple TiCl₄ feed streams have been used to control TiO₂ particle growth as described in U.S. Pat. No. 6,387,347. Any conventional type of corrosion resistant reaction vessel may be employed with the present invention. The vessel must be of such design, construction and dimension that preferably a continuous flow of reactants and products within and through the reaction zone(s) will be afforded and such control over the velocities, mixing rates, temperatures, and thus residence time distributions, will be permitted.

A typical reactor useful to practice the methods of the present invention may include a combustion chamber for preheating reactants and other such associated equipment as may be necessary for the safe operation to produce titania from TiCl₄ or other titanium dioxide precursor compounds and an oxygen containing gas according to the present invention. Preferred reactors suitable for use in the present invention include single stage and multistage reactors, with multistage reactors being most preferred. Multistage reactors have multiple inlet points and multiple reaction zones for introduction of reactants.

The growth of titanium dioxide particles occurs simultaneously with the reaction between the titanium dioxide precursor and oxygen in the reaction zone of a reactor. When the titanium dioxide precursor is TiCl₄, the reaction with oxygen takes place for a very brief period (between 0.5 and 30 milliseconds) until the TiO₂ product stream is rapidly cooled by heat transfer through the walls of the reactor by suitable means, for example, a flue immersed in water.

Doping certain metal oxide precursors with the titanium dioxide precursor feed into the reaction zone of a reactor can impact the form of the titania produced. The present invention includes titania particles formed with pure titanium dioxide precursor or including one or more dopants known in the art to produce titania with desired characteristics. Dopants include but are not limited to precursors that produce aluminum oxide, silicon oxide, zirconium oxide, boron oxide and tin oxide species in the titania particles. Additionally, a combination of dopants may be added to the process to produce titania particles with desired characteristics. The dopants may be produced by the introduction of any compound introduced into the reaction zone of the reactor with titanium dioxide precursor that will produce the desired oxide upon reacting with oxygen, including but not limited to silanes, silicon halides, alkylhalosilanes or alkylarylsilanes, silicon alkoxides including tetramethylorthosilicate or tetramethylorthosilicate and the like; aluminum halides, aluminum trialkoxides such as aluminum triisopropoxide, aluminum acetylacetonate and the like. Other precursors include, ZrCl₄, POCl₃, BCl₃, and Al₂Cl₆.

In one particular embodiment of the invention, the titanium dioxide precursor is mixed with a silicon compound to form an admixture and the admixture is introduced to the reactor with oxygen in the reaction zone of the reactor.

It is generally known that doping TiCl₄ with an aluminum oxide precursor favors the formation of the rutile form of TiO₂ (Akhtar and Pratsinis, 1994). In one embodiment of the invention, an aluminum oxide precursor is added to a feed comprising a titanium dioxide precursor and thoroughly mixed with the titanium dioxide precursor and the silicon compound prior to introduction into the reaction zone. In one embodiment, the titanium dioxide precursor is TiCl₄. Aluminum precursors are known in the art. Non-limiting examples of aluminum precursors include aluminum halides such as AlX₃ and Al₂X₆, where X is chloro, bromo, iodo or fluoro; aluminum trialkoxides, such as Al(OR)₃, where R is alkyl or aryl including aluminum triisopropoxide; and acyl aluminum species such as aluminum acetylacetonate. The aluminum precursor may be introduced into the process in sufficient quantity to produce titania with an Al₂O₃ concentration such that the titania produced is substantially anatase-free. In a particular embodiment, the aluminum precursor is AlCl₃.

The Al-doped titania particles of the present invention comprise between about 0.1% to about 20% Al₂O₃ by weight of the titania particle. In one embodiment, sufficient dopant is added to produce TiO₂ with from about 0.1 % to 10% Al₂O₃ by weight. In other embodiments the TiO₂ produced comprises from about 0.5% to about 5% or from about 0.5% to about 3% Al₂O₃ by weight of the titania particle. In yet another embodiment, the dopant is introduced in a quantity to provide a concentration of between about 0.5% to about 2% Al₂O₃ by weight of the titania particle.

In the manufacture of titanium dioxide from TiCl₄ and oxygen, TiCl₄ is heated and vaporized at temperatures between about 250°C and about 400°C. The hot TiCl₄ gas is further heated to temperatures of between about 300°C to about 650°C before introduction to the reaction zone. In one embodiment, the TiO₂ precursor, which may be TiCl₄, is heated to between about 400°C and about 500°C and the heated gas may be passed through an aluminum halide generator. The heat of reaction between aluminum and chlorine is released and heats the TiCl₄ further to a temperature of between about 500°C to about 700°C. In other embodiments, the TiCl₄ is heated to a temperature of between 500°C to about 600°C or between about 500°C to about 650°C before introduction to the reaction zone.

In addition to metal oxide dopants, water vapor may be used in the titania reaction. The reaction mixture may also contain a vaporized alkali metal salt to act as a nucleant. The alkali metal salts include inorganic potassium salts such as KCl, and organic potassium salts. Cesium salts including CsCl may also be used in the reaction.

Oxygen-containing gases are preheated to preferably between about 600°C and about 1000°C by means known in the art. The oxygen containing gas is then intimately mixed with the TiO₂ precursor and other metal oxides in the reaction zone of the reactor. Depending on the preheating process employed, the stream of oxygen containing gas feeding the reactor may be dry and relatively pure, but typically contains between about 50 ppm and about 200,000 ppm of water vapor based on the weight of TiO₂ produced. Suitable oxygen containing gases include air, oxygen-enriched air, or substantially pure oxygen. In one embodiment, the oxygen, TiO₂ precursor, the aluminum oxide precursor and the silicon compound can be introduced into reaction zone using one or more entry points using methods known in the art.

The temperature in the reaction zone where the TiO₂ precursor, the aluminum precursor and the silicon compound are introduced is between about 800°C and about 2000°C. In one embodiment the temperature range in the reaction zone is between about 850°C and about 1600°C. In other embodiments, the temperature in the reaction zone is between about 900°C and about 1800°C, between about 1200°C and about 1800°C or between about 1000°C and about 1300°C.

The pressure in the reaction zone where the titanium dioxide precursor and oxygen are reacted is between about 34.5 and about 689.5 kPa (about 5 and about 100 psig) In one embodiment, the reaction zone pressure is between about 34.5 and about 137.9 kPa (about 5 psig and about 20 psig) In still another embodiment, the reaction zone pressure is between about between about 68.9 and about 275.8 kPa (about 10 psig and about 40 psig) between about 137.9 and about 344.7 kPa (about 20 pig and about 50 psig) between about 275.8 and about 482.6 kPa (about 40 psig and about 70 psig) or between about 275.8 and about 689.5 kPa (about 40 psig and about 100 psig).

When multi-stage reactors are used, the oxygen containing gas may be introduced into the first and/or a subsequent reaction zone of the multi-stage vapor-phase reactor by any suitable means, such as a stream of oxidizing gas from a combustion chamber. The total quantity of oxygen added must be sufficient to fully react with the total quantity of the TiO₂ precursor added to all of the reaction zones of the reactor.

When the TiO₂ precursor is TiCl₄, the high temperature and rapid mixing of TiCl₄ and oxygen during the oxidation of TiCl₄ results in the formation of fine solid particles of rutile titanium dioxide and the liberation of the halogen (i.e., chlorine). In one embodiment, the solid suspension of titanium dioxide in the halogen (i.e., chlorine) and other diluent gases is at temperatures in excess of about 1500°C due to the exothermic nature of the reaction.

It is contemplated by the methods of the present invention that the oxygen containing gas can be added into the reaction zone before or the TiO₂ precursor and any dopants, such as alumina precursors and a silicon compound, are added.

In one embodiment with multistage reactors with a plurality of reaction zones, the TiO₂ precursor stream with preferably between about 0.1 to 10% aluminum halide, is divided into two or more sub-streams before entering the reaction zone. A silicon compound is added to one or more or all of these sub-streams of the TiO₂ precursor. One example of a multistage reactor suitable for use in the present invention is described in U.S. Pat. No. 6,387,347.

The amount of the silicon compound added to the TiO₂ precursor stream will depend on the operating temperatures, pressures and, on the extent of particle size reduction desired. In one embodiment, the amount of silicon compound added to the TiO₂ precursor stream is between about 0.01 % and about 3% by weight based on SiO₂ in the final titanium dioxide. In other embodiments, the amount of silicon compound is between about 0.01% and about 1%, between about 0.01% and about 2% and between about 0.05% and about 0.5% by weight of the titanium dioxide product.

Any silicon compound which is a gas or liquid at standard temperature and pressure may be used as long as it is converted to silicon dioxide under the reaction conditions specified herein. The SiO₂ precursors include but are not limited to silanes, silicon tetrahalides, such as SiCl₄, SiBr₄, SiF₄ or Sil₄; alkyl or aryl silylhalides, such as trimethylsilylchloride ((CH₃)₃SiCl) or triphenylsilylchloride; alkyl or aryl silyl di-halides or trihalides; hexalkyldisiloxanes, including hexamethyldisiloxane, (CH₃)₃SiOSi(CH₃)₃); mono-, di- or tri- or tetraalkoxysilanes, including tetraalkylorthosilicates such as tetraethylorthosilicate or tetramethylorthosilicate and the like, or tetraarylorthosilicates; alkylthiosilanes or arylthiosilanes; tetraalkylsilanes including tetramethyl or tetraethylsilane; tetraallylsilane; tetraarylsilanes; tetravinylsilanes; tetrabenzylsilanes; tetralkyl- or tetraaryldisilanes; tetraalkyl- or tetraaryldisilazanes; trialkyl- or triarylsilylacetates or sulfonates; and mixtures thereof. It is understood that the silicon precursor species with a mixture of groups on the silicon are also used in the invention. For example a compound such as phenyldimethylchlorosilane is a suitable silica precursor. In a particular embodiment of the invention, SiCl₄ is used as the silica precursor.

The physical parameters of each reaction zone are adjusted for the anticipated process conditions by those skilled in the art to achieve the desired percent conversion of a titanium dioxide precursor at the end of that reaction zone. In one embodiment, mean residence times of less than 30 milliseconds are used in the first or intermediate reaction zone. In another embodiment, residence times of between 0.5 and 20 milliseconds are used.

Typically, the residence time in each reaction zone is a complex function of mixing intensity, density of gases and temperature profiles. Further, since mixing is not instantaneous, there is a distribution of temperatures and reactant conversions across the reaction zone for a given mean residence time. These parameters may be calculated using equations well known in the art of fluid mechanics and reaction kinetics.

Mixing rates between the reactants may be used to adjust the extent of conversion of the reactants to TiO₂ by controlling the flow of a titanium dioxide precursor and the silicon compound into the reaction zone. The flow may be controlled by, for example, adjusting the width of the slots or orifices through which the titanium dioxide precursor enters a reaction zone. As one of ordinary skill will understand, provided there is sufficient energy to drive the reaction rapidly, an increase in slot width will generally decrease the initial mixing rates of the reactants and broaden the distribution of conversion of the reactants across the reactor cross section. Decreased mixing will delay the reaction, which will decrease both the maximum temperature in the reactor and the time the newly formed titania is exposed to that temperature in that reaction stage.

In one embodiment of the invention, TiCl₄, AlCl₃, SiCl₄ and oxygen, are intimately mixed and titanium dioxide particles comprising aluminum oxide and silicon dioxide is formed in the reaction. The silicon dioxide may be incorporated within the titanium dioxide crystal lattice or dispersed as a coating admixed with some titanium dioxide, aluminum oxide and aluminum titanate. The amount of silicon dioxide or silicon containing compounds on the surface of titanium dioxide is a function of total amount of SiCl₄ added, reactor temperature and residence time.

The titanium dioxide formed in the processes of the present invention is substantially anatase-free which means that the TiO₂ is essentially at least 97% in the rutile form, free of the anatase form of TiO₂. In other embodiments, the TiO₂ is at least 98% or 99% by weight in the rutile form. In still other embodiments, the TiO₂ is at least 99.5%, 99.8% or 99.9% in the rutile form, free from the anatase form of TiO₂. The particle size of the primary TiO₂ particles formed by the process of the invention is between about 50 nm to about 500 nm. In other embodiments, the particle size of the TiO₂ is between about 100 nm to about 400 nm or between about 100 nm to about 300 nm.

While not being bound to any particular theory with respect to the present invention, the addition of silicon compounds (i.e., SiCl₄) in the TiCl₄ stream results in the formation of silica which reduces the sintering rates of titania. The reduction in sintering rates results in weaker bonds holding the agglomerates of titanium dioxide together. This results in agglomerates that are softer as opposed to hard agglomerates formed in the absence of the silicon compound. The soft agglomerates with their ease of breakup also lead to a decrease in fraction of particles greater than 0.5mm. This is an important consideration as these large particles cause "grit" in paints and lead to loss of gloss.

Hard agglomerates include agglomerates of primary particles of titanium dioxide that are difficult to break up and require expenditure of more energy. A measure of ease of break up is the power consumption in sand milling operations or steam to pigment ratio in fluid energy mills to achieve the same standard gloss in a latex paint film. Hard agglomerates need more power or more steam to reach the gloss levels than would be needed by agglomerates made by the process of this invention.

Soft agglomerates include agglomerates of primary particles of titanium dioxide that are easy to break up and require less energy. Soft agglomerates would require less power during milling operations and lower steam to pigment ratio during fluid energy milling to achieve the same degree of gloss than those agglomerates produced without premixing SiCl₄ with the TiCl_{4.}

The process of the invention further provides a uniform, homogeneous coating of a metal oxide on the surface of the pre-formed titania particles to lower the photoactivity of the TiO₂ particles and to add durability to the pigment. The metal oxide coating is achieved by introduction of a second metal oxide precursor compound, which is homogeneously mixed with a solvent component, downstream of the reaction zone of the process, after the TiO₂ particles have been formed. The metal oxide precursor forms a uniform coating on the TiO₂ particles upon contact with the pre-formed TiO₂ particles. Use of the solvent component with the metal oxide coating precursor achieves better mixing of the coating precursor compound with the TiO₂ and provides TiO₂ particles coated with a uniform metal oxide layer without the formation of separate metal oxide particles that are not incorporated in the coating layer. The metal oxide coating is not limited to any one specific metal oxide and may comprise any desired metal oxide depending on the desired characteristics of the coated TiO₂ particles. For example, the TiO₂ particles of the present invention may be coated with a uniform, homogeneous layer of one or more of SiO₂, Al₂O₃, B₂O₃, ZrO₂, GeO₂. MgO, ZnO or SnO₂ by choosing a suitable metal oxide precursor. The metal oxide coating can also comprise more than one metal oxide coating layer or a coating layer comprising a mixed metal oxide, for example species described by the formula [SiO₂]ₓ [Al₂O₃]_{y}, where x = 0 to 1 and y = 0 to 1, and the sum of x and y is 1. The metal oxide coating may comprise the same metal oxide mixed with the TiCl₄ feed or may be different.

In one embodiment, the metal oxide used to coat the TiO₂ particles may be SiO₂. In another embodiment, the metal oxide used to coat the TiO₂ particles may be an oxide of aluminum. Any compound that forms an oxide of aluminum upon contact with the TiO₂ particles may be used in the process. For example, suitable aluminum oxide precursors include but are not limited to aluminum halides including AlX₃ and Al₂X₆, where X is chloro, bromo, iodo or fluoro; aluminum trialkoxides (Al(OR)₃ including aluminum triisopropoxide; aluminum acyl compounds including aluminum acetylacetonate; and tetralkyldialuminoxanes (R₂Al-O-AlR₂), where R is alkyl or aryl.

The surface coating of pigmentary titania by the deposition of a silica precursor after the titania particles have formed has been described. United States Patent No. 5,562,764 ('764 patent) to Gonzalez describes a process where SiCl₄ is added downstream of the TiCl₄ and oxygen reaction zone in a plug flow reactor. The patent discloses that the SiCl₄ must be added at a temperature of between about 1200° to about 1600°C and at a pressure of between 34.5 - 689.5 kPa (5-100 psig). International Application Publication No. WO 96/36441 ('441 publication) describes a process to form pigment-grade titania coated with a second metal oxide. Similar to the '764 patent, the '441 publication discloses that the temperature at which a silica precursor is added to the process must be greater than 1300°C to ensure that the silica precursor completely reacts to form SiO₂. The minimum temperature disclosed in the '764 patent and the '441 publication for the addition of the silica precursor is consistent with the description in the '441 publication that a sufficiently high temperature is required to enable the silica precursor to form SiO₂ on the surface of the TiO₂ particles. The '441 publication also states that use of temperatures that are too low during the coating stage result in the formation of separate particles of the coating component that are not incorporated into the coating. These publications describe the addition of a silica precursor in neat form downstream of the reaction zone.

When a silicon compound in neat form is introduced into the reactor, the quality of mixing of the silicon compound with the pre-formed TiO₂ is poor, and the momentum of the additional silicon compound is very small compared to that of the reactor. The poor mixing of the silicon compound with the TiO₂ results in the formation of separate particles of SiO₂ in addition to the SiO₂ coating layer on the TiO₂. The separate SiO₂ particles result from areas of high silicon compound concentrations reacting to form SiO₂ and forming separate particles in addition to the formation of a coating layer on the TiO₂. The formation of separate SiO₂ particles with the coated TiO₂ is undesirable. The loose silica particles represent a loss in coating efficiency as the titania particles are not coated with silica material. The loose particles present no benefit in supressing the photoactivity of the titania particles. The formation of loose particles will require more of the silica precursor to be used to achieve the same coating thickness. The increased usage of the silica precursor is an added cost to the process which should be avoided.

In contrast to the processes described in the '764 and '441 publications, when the metal oxide coating comprises SiO₂, the process of the present invention provides for a uniform coating of TiO₂ particles without the formation of separate SiO₂ particles. The improved mixing allows the coating at lower temperatures without the formation of separate SiO₂ particles that are not incorporated into the coating. The silica coating precursor compound is homogeneously mixed with a solvent component prior to introduction into the reactor. The solvent component must be inert to any reaction components, including the TiO₂ particles and the silica precursor compound. Homogeneously mixing the silica precursor compound with an inert solvent component dilutes the silicon compound and avoids pockets of high concentration as the silicon compound comes in contact with the pre-formed TiO₂ particles. Furthermore, mixing the silicon compound with a solvent component greatly improves the mixing of the silicon compound with the reaction components when the mixture is introduced into the reactor. As a result, the present process produces TiO₂ particles that are uniformly coated with SiO₂ without the formation of separate SiO₂ particles. This process further allows the uniform coating of TiO₂ particles with a metal oxide at lower temperatures than previously thought possible due to formation of separate SiO₂ particles at lower coating temperatures.

The quality of mixing can be measured by the variation in the concentration of a metal oxide precursor in a solvent component. The quality of mixing of two components is considered good if the standard deviation of the concentration of one or both components at a point in the reactor is small. In the present invention, the quality of mixing refers to the mixing of a metal oxide coating precursor in a solvent component that is mixed with the product stream of the reaction of a titanium dioxide precursor and oxygen, which includes TiO₂ particles. A mixture may be described by the variation coefficient M, the ratio of the standard deviation of the concentration of a given component in a mixture to the mean of the expected concentration of the component in the mixture (M = standard deviation of concentration/expected concentration). A homogeneous mixture is defined herein as a mixture where the coefficient M = 0.01. The mixing time, t, is defined as the time taken by the mixture components from the point of mixing to the point where M = 0.01 (see Harnby and Edwards, 1992). Initially when two components are mixed, the coefficient M will be significantly larger than 0.01 but approach a lower limit with time or distance in the reactor. As the coefficient M becomes smaller and approaches zero, the actual concentration of the metal oxide precursor in the reactor approaches the expected concentration.

In one embodiment of the invention, the mixing quality of the metal oxide precursor (and solvent component) and the TiO₂ particles is defined by a variation coefficient M of between about 0.1 to 0.001 within the coating zone of the reactor. It is understood that the coefficient M is measured at a point in the reactor when the metal oxide precursor forms a metal oxide coating on the TiO₂ particles. Although it is possible to reach a coefficient value of 0.01 or lower with enough time or distance traveled from the injection point of the metal oxide precursor, the definition of the mixing quality between the TiO₂ and the metal oxide coating precursor is only relevant in the area of the reactor where the metal oxide coating precursor is converted into the metal oxide in the presence of TiO₂. In another embodiment, the quality of the mixing achieved with the invention is between about 0.1 to about 0.01. Instill in other embodiments, the coefficient M of the mixture at the point of contact with the TiO₂ particles is between about 0.075 to about 0.01, about 0.05 to 0.005, about 0.025 to about 0.005, about 0.01 to about 0.005, and about 0.01 to about 0.001.

In one embodiment, the quality of mixing can be improved by increasing the rate at which a solvent component mixed with a metal oxide precursor is added to the process and mixed with the pre-formed TiO₂ particles. For example, the flow rate of addition of a solvent component mixed with a metal oxide precursor can be increased to improve the mixing of the metal oxide precursor with the TiO₂ particles in the reactor. Although not being limited by theory, in general larger solvent component flow rates will result in lower concentrations of the metal oxide precursor and higher quality mixing with the TiO₂. Different flow rates may be required depending on the properties of the solvent component to achieve optimum mixing. The flow rate of the solvent component is not limited but can be varied depending on the quality of mixing required.

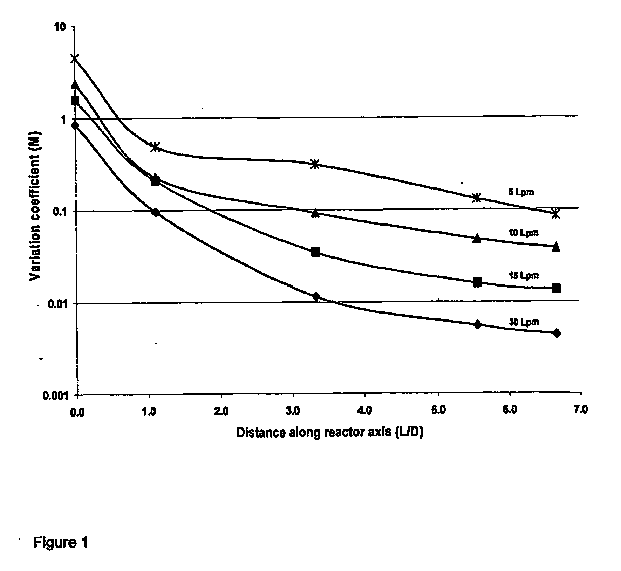

Figure 1 shows a plot of the standard deviation of nitrogen distribution in the reactor as a function of distance along the reactor. The plot shows that with higher nitrogen flow rates, the standard deviation of nitrogen distribution with the other reactor components (TiO₂, oxygen and other byproducts) drops faster, approaching a minimum. The plot illustrates that larger flow rates achieve better mixing in a shorter distance (or time) in the reactor coating zone. Similar behavior is expected of different solvent components, although the absolute values may be different due to the properties of the compound. This plot is also illustrative of the improved mixing of a metal oxide precursor homogeneously mixed with the solvent component, i.e., nitrogen, with the reaction components. The homogenous distribution of the metal oxide precursor in the solvent component avoids areas of high concentration and prevents the formation of separate metal oxide particles. Moreover, the improved mixing of the metal oxide precursor with the TiO₂ allows for a uniform coating of the TiO₂ with the metal oxide.

The solvent component may be any gas or liquid that is inert to the reactor components and that can homogeneously dissolve or disperse the metal oxide precursor compound and provides a homogenous mixture with the metal oxide coating precursor. A solvent component will provide improved mixing of the metal oxide precursor and the TiO₂ particles and enable a smooth homogeneous coating of the TiO₂ without the formation of separate metal oxide particles. Solvent components may be liquid or gaseous halides such as chlorine or bromine, liquid or gaseous carbon dioxide, liquid or gaseous nitrogen and argon. In one embodiment, the solvent component is liquid chlorine. Since chlorine is used in the process to prepare TiCl₄, the use of chlorine as a solvent component is particularly convenient in the production of coated TiO₂.

When the metal oxide coating is SiO₂, any of the silicon compounds that form SiO₂ upon contacting the pre-formed TiO₂ particles may be used in the coating step. In certain embodiments, the silicon compounds listed herein for mixing with the TiO₂ precursor feed prior to the TiO₂ formation reaction may be also be used for the coating step of the process. In a particular embodiment, the silicon compound is SiCl₄.

The silicon compound used for the coating is optimally introduced at a point downstream of the reaction zone where the TiO₂ precursor, such as TiCl₄, (and other metal oxides precursors such as AlCl₃) reacts with oxygen to form TiO₂ so that the majority of the TiO₂ particles are formed before coming in contact with the coating precursor. In this way, introduction of the coating precursor will not substantially change the characteristics of the TiO₂ particle. For example, introduction of a SiCl₄ after the majority of the titania particles have substantially completely formed will avoid the effect of silicon to inhibit the phase transformation from the anatase form to rutile.

In one embodiment of the invention, at least about 70% of the TiO₂ precursor has been reacted to form titanium dioxide particles before the metal oxide precursor is introduced into the product stream. In another embodiment, at least about 80% of the TiO₂ precursor has reacted to form titanium dioxide particles. In still another embodiment, at least about 90% of the TiO₂ precursor has reacted to form titanium dioxide particles. In yet other embodiments, at least 95%, 98%, 99% or 99.5% of the TiO₂ precursor has reacted to form titanium dioxide particles before the metal oxide is introduced.

The metal oxide precursor compound forms a homogeneous mixture with the solvent component. Although solutions of the metal oxide precursor and the solvent component are contemplated, it is not necessary that a solution between the solvent component and the metal oxide precursor is formed. In either case, the mixture will improve the mixing of the metal oxide precursor with the TiO₂ and decrease the concentration of the metal oxide precursor to avoid areas of high concentration that result in the formation of separate particles of the metal oxide. The amount of metal oxide coating on the TiO₂ particles is adjusted by modifying the concentration of the metal oxide precursor in the coating zone of the reactor. Sufficient metal oxide precursor is added to produce coated titania particles comprising between about 1% to about 30% metal oxide by weight of the product TiO₂ particles. In other embodiments, sufficient metal oxide precursor is added to produce between about 1% to about 20%, about 1% to about 15%, about 1% to about 10% or between about 1% to about 5% SiO₂ by weight of the product TiO₂ particles.

The temperature at which the metal oxide coating precursor is introduced into the coating zone of the reactor is also an important parameter that impacts the extent to which the titanium dioxide particles have been completely formed. In one embodiment, the metal oxide coating precursor is added at a point in the process downstream of the reaction zone where the temperature is less than about 1300°C. In other embodiments, the coating precursor is introduced at a temperature of less than about 1200°C or less than about 1100°C. In yet further embodiments of the invention, the coating precursor is introduced into the coating zone of the reactor at a temperature of less than about 1000°C or less than about 900°C. It is understood that the coating precursor and solvent component are introduced into the process to contact the TiO₂ particles at a point where substantially all of the Ti02 particles have formed. The temperatures described here refer to the temperature of the reactor mass in the coating zone of the reactor, downstream from the reaction zone.

The thickness of the metal oxide coatings produced by the present invention may be varied by adjusting the concentration of the metal oxide precursor in the coating zone of the reactor. The coated titania particles of the present invention will contain metal oxide coating layers of about 1 nm to about 10 nm thick. In one embodiment, the metal oxide coating layer is from about 2 nm to about 8 nm thick. In other embodiments, the metal oxide coating layer is from about 2 nm to about 6 nm thick or from about 2 nm to about 4 nm thick.

The specific surface area (SSA) of the TiO₂ particles produced by the present invention is between about 5 m²/g to about 50 m²/g. In other embodiments, the SSA is between about 5 m²/g to about 30 m²/g, between about 5 m²/g to about 20 m²/g or between about 5 m²/g to about 15 m²/g.

In one embodiment, the substantially anatase-free titanium dioxide of the present invention is produced at production rates of preferably from about 13.5 metric tons to about 30 metric tons per hour. However, the present invention contemplates higher and lower production rates.

In a particular embodiment of the present invention, a process for producing substantially anatase-free TiO₂ is provided which comprises: reacting TiCl₄ which has been pre-mixed with an aluminum halide such as AlCl₃, and an oxygen-containing gas in the vapor phase at a reaction temperature of at least about 650°C. The reaction pressure is between about 34.5 and 689.5 kPa (about 5 and 100 psig), or between about 275.8 and about 482.6 kPa (about 40 and about 70 psig). The TiCl₄ (premixed with aluminum chloride) and oxygen is reacted in the presence of water vapor in the amount between 50 and 200,000 ppm (based on weight of titanium dioxide being produced). Optionally, a growth retardant is added comprising any of the alkali metal halides in the amount between about 2 and about 3000 ppm based on titanium dioxide being produced. Some alkali metal halides include halides of Li, Na, K, Rb, Cs, and the like. The titanium tetrachloride may be introduced into the reaction zone in a single stage or in two or more stages. In one embodiment, the amount of titanium tetrachloride introduced into the first stage is between about 10% and about 90% of the total flow. In another embodiment, the amount of TCl₄ introduced into the first stage is between about 30% and about 70%. The residence time of the reactants in the first stage of the reactor is between about 0.5 and about 20 milliseconds, and the mean temperature in the first stage is between about 800°C and about 1200°C. The mean temperature in later stages of the reactor is between about 1000°C and about 1400°C. Particle growth in the first, second or subsequent stages is controlled by adding a silicon halide to the hot gaseous titanium tetrachloride (premixed with aluminum chloride), and allowing the silicon halide to enter the reactor along with titanium tetrachloride. The amount of silicon halide added with the titanium tetrachloride is between about 0.01% and about 3% as SiO₂ by weight based on the weight of the final TiO₂ product produced. In another embodiment, the amount of the silicon halide is between about 0.05% to about 0.5% by weight of pigment produced.

The process of the invention further includes a coating step for coating the TiO₂ particles with a uniform, homogeneous layer of silica comprising a) homogeneously mixing a SiO₂ precursor compound, such as SiCl₄, with a solvent component that is inert to the reactor components, such as liquid chlorine; and b) introducing the mixture of the silica precursor compound and the solvent component into a coating zone of the reactor, which is downstream of the reaction zone of the reactor, to contact the TiO₂ particles produced in the reaction zone of the reactor. The silicon halide forms SiO₂ on the surface of the TiO₂ particles without forming separate SiO₂ particles when it is introduced to the process in a homogeneous mixture with a solvent component. The amount of silicon halide added in the coating step of the process is between about 1% to about 20% as SiO₂ based on the weight of the final pigment produced. In other embodiments, the amount of silicon halide added is between about 1% to about 15%, between about 1% and about 10% or between about 1% and about 5%.

Although not being bound by theory, the metal oxide coating layer may be formed by association of the metal oxide precursor on the titania particles followed by oxidation of the precursor to form the metal oxide. Alternatively, the metal oxide precursor may form the oxide by oxidation of the precursor followed by deposition and sintering on the titania particles. The coating of the titania particles by the process described herein forms a uniform and homogeneous layer covering the titania particles.

The coated TiO₂ product is cooled by suitable means known in the art prior to isolation. In one embodiment, the mixture is cooled in a water-cooled flue. In some embodiments, granular scouring particles or scrubs material, for example, sodium chloride, potassium chloride, sand or calcined TiO₂ are added to the flue to scrape away the deposits of TiO₂ on the internal surface of the flue pipe by methods known in the art. In other embodiments, the amount of granular scouring particles or scrubs used in the process are reduced or eliminated. The titanium dioxide pigment is separated from the gases by conventional techniques like electrostatic precipitation, cyclonic means or passage through a porous media. The recovered titanium dioxide may be subjected to further treatment where it is mixed with additional chemicals, ground, dried and milled to attain the desired levels of pigment performance.

The titania produced by the present invention has a reduced particle size and improved durability as a result of the smooth, homogenous coating of a metal oxide. When the metal oxide is SiO₂, the introduction of the silica precursor downstream of the TiO₂ formation has the advantage that the TiO₂ particles are not affected by the introduction of the coating precursor. Furthermore, mixing the silica precursor in a solvent component, such as chlorine, allows for greatly improved mixing and avoids the formation of separate silica particles in the product that are not incorporated in the coating layer.

The methods of the present invention provide several improvements over the prior art in the manufacturing of titanium dioxide from TiCl₄. These improvements include: (i) reduction of particle size with reduced consumption of SiCl₄ and AlCl₃ (ii) substantially no anatase contamination in the titanium dioxide product (less than about 0.2%); (iii) reduction or elimination of the amount of scrubs in the cooling conduit or flue; (iv) formation of a uniform, homogeneous metal oxide coating without separate particles of the metal oxide providing improved durability; and (v) the ease of milling increased due to more soft agglomerates.

Having now generally described the invention, the same may be more readily understood through the following reference to the following examples, which are provided by way of illustration and are not intended to limit the present invention unless specified.

Examples

The following examples are presented to aid in an understanding of the present invention and are not intended to, and should not be construed to, limit the invention in any way. All alternatives, modifications and equivalents that may become obvious to those of ordinary skill in the art upon a reading of the present disclosure are included within the spirit and scope of the invention.

The examples below show that as pressure in the reaction zone is increased, rutile content of the TiO₂ pigment also increases resulting in substantially-anatase-free TiO₂ pigment with a rutile content of at least 99.8%. Further, premixing SiCl₄ with TiCl₄ before reacting the admixture with oxygen under pressure results in TiO₂ pigment that is substantially anatase-free (rutile content of at least 99.8%) with reduced particle size. The examples below also show that homogeneously mixing a metal oxide coating precursor with a solvent component greatly improves the mixing of the metal oxide precursor with the TiO₂ particles and produces uniform coatings of a metal oxide precursor on the TiO₂ particles.

Test Methods

Particle Size

Particle size distribution is measured by laser light scattering using Mie theory to calculate an "equivalent spherical diameter". The measurements are conducted on a Perkin-Elmer Lamda 20 Spectrometer. The titanium dioxide is dispersed in aqueous solution of tetrasodium pyrophosphate and a fixed level of sonication.

Example 1

TiCl₄ was preheated and introduced into the reactor. The AlCl₃ in the mixture provided 5.8 percent by weight of Al₂O₃ on reaction with oxygen based on the weight of TiO₂ formed. This TiCl₄ / AlCl₃ mixture was split into two streams by means of flow control devices. The first stream was introduced into the first reaction zone through a first reactor stage TiCl₄ nozzle. Simultaneously, preheated oxygen was introduced into the reactor through a separate inlet into the reaction zone. About 0.56 wt % SiCl₄ (SiO₂ by weight of TiO₂) was added to one of the TiCl₄ streams prior to contact with oxygen. The reactor pressure was about 96.5 kPa (14 psig). The suspension of TiO₂ formed was introduced into a flue pipe. The TiO₂ was separated from cooled gaseous products by filtration. The product TiO₂ was examined for particle size and percent rutile. The mean particle size was 0.118 µm. The rutile content was 96.5 percent, that is, 3.5 percent anatase was present.

Example 2

TiCl₄ was preheated to 350°C, mixed with chlorine and passed through a bed containing aluminum. The rate of TiCl₄ feed corresponded to a TiO₂ production rate of 14.5 metric tons per hour (mtph). The exothermic reaction between chlorine and aluminum generated aluminum chloride and heat. The heat of reaction raised the temperature of the TiCl₄/ AlCl₃ mixture to about 450°-460°C at the point of entry into the reactor. The AlCl₃ in the mixture provided one percent by weight of Al₂O₃ on reaction with oxygen based on the weight of TiO₂ formed. This TiCl₄/AlCl₃ mixture was split into two streams by means of flow control devices. The first stream was introduced into the first reaction zone through a first reactor stage TiCl₄ slot. Simultaneously, preheated oxygen having been further heated by hydrocarbon combustion to about 1500°C was introduced into the reactor through a separate inlet into the reaction zone. Trace amounts of KCl dissolved in water were sprayed into the hot oxygen stream. The reactor pressure was about 482.6 kPa (70 psig). The suspension of TiO₂ formed was introduced into a flue pipe containing scrubs. The amount of scrubs (i.e., sodium chloride) used was about 1.8% of the TiO₂ produced. The TiO₂ was separated from cooled gaseous products by filtration. The product TiO₂ was examined for particle size distribution and percent rutile content. The mean particle size was 0.338 µm with a standard deviation of 1.405. The rutile content was greater than 99.8 percent.

Example 3

The process of Example 2 was repeated except that 0.22% SiCl₄ (SiO₂ by weight of TiO₂) was added to the TiCl₄ stream prior to reaction with oxygen. The amount of scrubs (i.e., sodium chloride) used was about 0.8% of the TiO₂ produced. The product TiO₂ was examined for particle size distribution and percent rutile content. The mean particle size was 0.328 µm with a standard deviation of 1.404, and the rutile content was greater than 99.8 percent.

Example 4

The process of Example 2 is repeated at 13.5 mtph except that 1.1% % SiCl₄ (SiO₂ by weight of TiO₂) is be added to the TiCl₄ stream prior to reaction with oxygen. The amount of scrubs (i.e., sodium chloride) is eliminated. The product TiO₂ is examined for particle size distribution and percent rutile content. The mean particle size is estimated to be at 0.278 µm with a standard deviation of 1.424, and the rutile content is estimated to be greater than 99.8 percent.

Example 5

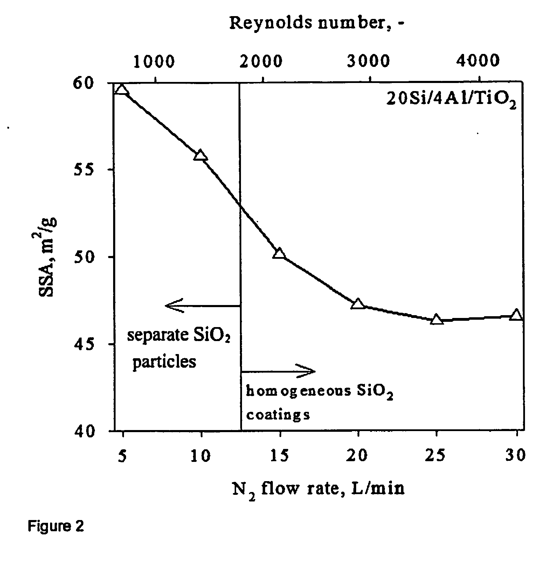

The table below shows the effect of nitrogen gas flow rate with the SiO₂ precursor hexamethyldisiloxane ((CH₃)₃Si-O-Si(CH₃)₃, HMDSO) on the SiO₂ coating quality. The HMDSO is homogeneously mixed with the nitrogen gas, which acts as the solvent component. In addition to the nitrogen flow rate, the number of feed nozzles adding the nitrogen/HMDSO mixture is varied (1, 2, 4, 8 and 16). As Figure 2 shows, the specific surface area (SSA) is reduced by increasing the N₂ flow rate. At 5 Umin N₂ an SSA of 60 m²/g is obtained while at 20 Umin it has been reduced to 47 m²/g for 16 openings. The increase in N₂ flow rate is accompanied by a reduction in temperature which should have rather increased the SSA. Also the rutile content only slightly decreased from 68 to 60 wt% by increasing the N₂ flow rate from 5 to 30 Umin, respectively. However, as the N₂ flow rate increases the vapor exit velocity through the feed openings and thus the coating jet Reynolds number increases affecting the overall mixing of HMDSO-laden N₂ stream with the titania stream (Fig. 2, upper abscissa). Below 15 Umin low quality coatings are obtained while high quality coatings are obtained above this (see table). Increasing the N₂ flow rate improves the mixing of the TiO₂ particles with the HMDSO-nitrogen streams by the ensuing turbulence.

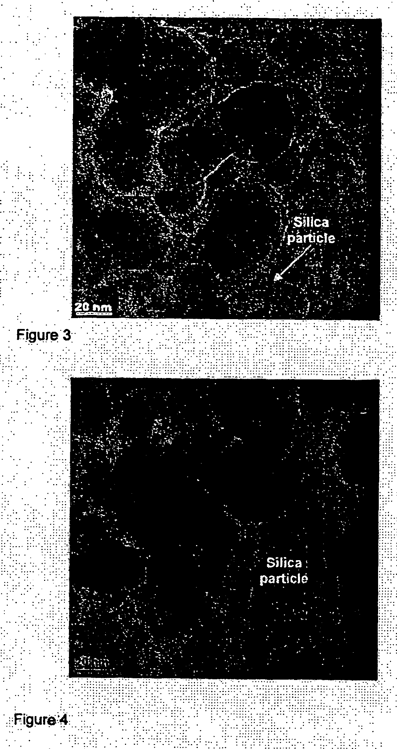

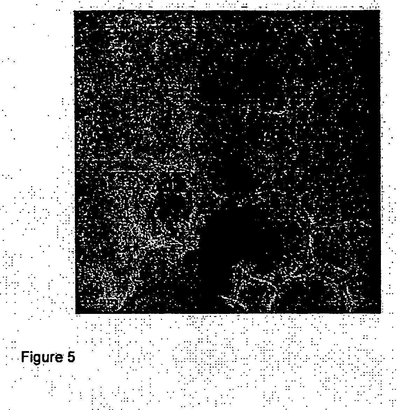

Figures 3, 4 and 5 show TEM images of product particles obtained with 5 Umin. (0.02 W), 10 Umin. (0.1 W) and 20 Umin, respectively. (1.0 W) flow rates of nitrogen homogeneously mixed with HMDSO. At the lower nitrogen flow rates of 5 and 10 Umin. (Figs. 3 and 4) separate rod-shaped SiO₂ particles appear as well as silica-coated TiO₂ and uncoated TiO₂. These lower flow rates illustrate conditions of poor mixing, analogous to adding a metal oxide precursor in more concentrated form. At 20 Umin N₂ (Fig. 5) all titania particles were coated and no separate SiO₂ particles were observed.

Effect of N2 flow rate on TiO₂ particles

| Feed Openings | N₂ ring L/min | Power input W | SSA m²/g | Rutile wt% | xₐ¹ nm | xᵣ¹ nm | Qualitative Coating Efficiency (TEM) |
|---|---|---|---|---|---|---|---|
| 16 | 5 | 0.02 | 60 | 68 | 38 | 32 | low |
| 16 | 10 | 0.1 | 56 | 64 | 33 | 27 | low |
| 16 | 15 | 0.4 | 50 | 60 | 35 | 28 | high |
| 16 | 20 | 1.0 | 47 | 59 | 26 | 23 | high |
| 16 | 25 | 2.0 | 46 | 62 | 28 | 24 | high |
| 16 | 30 | 3.5 | 47 | 62 | 30 | 19 | high |
| 8 | 9.5 | 0.4 | 45 | 59 | 39 | 33 | low |
| 4 | 6.0 | 0.4 | 38 | 48 | 40 | 32 | low |
| 2 | 3.8 | 0.4 | 47 | 48 | 43 | 30 | low |
| 1 | 2.4 | 0.4 | 37 | 50 | 40 | 31 | average |
| 2 | 5.0 | 1.0 | 38 | 53 | 42 | 31 | average |
| 2* | 5.0 | 1.0 | 38 | 46 | 39 | 29 | average |
| 2* | 10.0 | 8.3 | 48 | 59 | 37 | 28 | high |

| | | | | | | | |
|---|---|---|---|---|---|---|---|
| *: HMDSO was supplied from the evaporator unit. ^{1.} anatase and rutile crystallite sizes of 20Si/4Al/TiO₂ particles | | | | | | | |

Example 6

Silicon tetrachloride is homogeneously mixed with a stream of liquid chlorine and fed into the reactor downstream of the TiCl₄ and oxygen reaction zone described in Examples 1-4 at a rate of 22.68 kg/hr (5000 lbs/hr). The SiCl₄ contacts the pre-formed TiO₂ and deposits a uniform coating of SiO₂ upon oxidation. The suspension of coated TiO₂ particles formed is introduced into a flue pipe. The TiO₂ is separated from cooled gaseous products by filtration. The process produces TiO₂ particles coated with a uniform coating of SiO₂ between about 2 nm to about 4 nm thick. The silica content of the product is about 2 wt%. Separate particles of SiO₂ are not observed. The mean particle size is between 0.280 µm and 0.285 µm and the rutile content is greater than 99%.

References

Akhtar, M. K., S. E. Pratsinis, and S. V. R. Mastrangelo, "Vapor-phase synthesis of Al-doped titania powders,"J. Mater. Res. 9, 1241 (1994).

Allen, N. S., M. Edge, G. Sandoval, J. Verran, J. Stratton, and J. Maltby, "Photocatalytic coatings for environmental applications," Photochem. Photobiol. 81, 279 (2005).

Egerton, T. A., "The modification of fine powders by inorganic coatings," KONA 16, 46 (1998).

Harnby, N., Edwards, M.F. and Niewnow, A.W., "Mixing in the Process Industries", Butterworth Heinemann, 1992.

Hung, C. H., and J. L. Katz, "Formation of mixed-oxide powders in flames 1. TiO2-SiO2," J. Mater. Res. 7, 1861 (1992).

Kodas, T. T., Q. H. Powell, and B. Anderson, *Coating of TiO₂ pigment by gas-phase and surface neactions,* International patent, WO-96/36441 (1996).

Lee, S. K., K. W. Chung, and S. G. Kim, "Preparation of various composite TiO2/SiO2 ultrafine particles by vapor-phase hydrolysis," Aerosol Sci. Technol. 36, 763 (2002).

Piccolo, L., B. Calcagno, and E. Bossi, *Process for the post-treatment of titanium dioxide pigments,* United States Patent, 4050951 (1977).

Powell, Q. H., G. P. Fotou, T. T. Kodas, B. M. Anderson, and Y. X. Guo, "Gas-phase coating of TiO2 with SiO2 in a continuous flow hot- wall aerosol reactor," J. Mater. Res. 12, 552 (1997).

Teleki, A., S. E. Pratsinis, K Wegner, R. Jossen, and F. Krumeich, "Flame-coating of titania particles with silica," J. Mater. Res. 20, 1336 (2005).

Wegner, K., and S. E. Pratsinis, "Nozzle-quenching process for controlled flame synthesis of titania nanoparticles," AIChE J. 49, 1667 (2003).

Having thus described and exemplified the invention with a certain degree of particularity, it should be appreciated that the following claims are not to be so limited but are to be afforded a scope commensurate with the wording of each element of the claim and equivalents thereof.

## Claims

1. A process for the preparation of substantially anatase-free titanium dioxide particles comprising a uniform homogeneous coating of a metal oxide on the surface of the titanium oxide particles comprising:
(a) introducing a titanium dioxide precursor and oxygen into a reaction zone of a reactor to produce substantially anatase-free TiO₂, wherein the reaction zone is at a pressure greater than 34.5 kPa (5 psig) to about 689.5 kPa (100 psig); and
(b) contacting the substantially anatase-free TiO₂ particles with a metal oxide precursor homogeneously mixed in a solvent component downstream of the reaction zone to form coated titanium dioxide particles with a smooth, homogeneous metal oxide coating, wherein separate particles of the metal oxide coating are not produced; and
(c) isolating the coated ultrafine titanium dioxide particles.

2. The process of claim 1, wherein the titanium dioxide precursor is mixed with a silicon compound to form an admixture before introducing the titanium dioxide precursor and oxygen into the reaction zone.

3. The process of claim 1, wherein the titanium dioxide precursor is titanium tetrachtoride.

4. The process of claim 1, wherein the substantially anatase-free TiO₂ is at least 99.9% rutile TiO₂.

5. The Process of claim 1, wherein the reaction zone pressure is between about 275.8 kPa (40 psig) and about 689.5 kPa (100 psig), or in one embodiment between about 275.8 kPa (40 psig) and about 482.6 kPa (70 psig).

6. The process of claim 1, wherein the reaction zone has a temperature of between about 850°C to about 1600°C, or in one embodiment between 1000°C to about 1300°C, or in one embodiment wherein the reaction zone temperature is about 1200°C.

7. The process of claim 2, wherein the silicon compound is silicon tetrachloride and the amount of silicon tetrachloride mixed with the titanium dioxide precursor produces TiO₂ with between about 0.05% to about 0.5% SiO₂ by weight of the TiO₂ product.

8. The process of claim 1, further comprising adding an aluminum halide to the titanium dioxide precursor before introducing the titanium dioxide precursor and oxygen into the reaction zone.

9. The process of claim 1, wherein the reaction zone has multiple stages.

10. The process of claim 1, wherein the metal oxide coating comprises a metal oxide selected from the group consisting of SiO₂, Al₂O₃, B₂O₃, ZrO₂, GeO₂, MgO, ZnO and SnO₂.

11. The process of claim 10, wherein the metal oxide is SiO₂.

12. The process of claim 1, wherein the metal oxide precursor is selected from the group consisting of silicon halides, hexaalkyldisiloxanes, tetraalkylorthosilicates and silanes.

13. The process of claim 17, wherein the metal oxide precursor is a silicon halide.

14. The process of claim 2 or 13, wherein said silicon compound of claim 2 or said metal oxide precursor of claim 13 is a silicon tetrachloride.

15. The process of claim 1, wherein the solvent component is selected from the group consisting of a liquid halide, a halide gas, liquid carbon dioxide, carbon dioxide gas, nitrogen gas and argon gas.

16. The process of claim 15, wherein the solvent component is liquid chlorine.

17. The process of claim 1, wherein the TiO₂ particles are contacted with the metal oxide precursor at a point downstream of the reaction zone where at least 90% of the TiCl₄ has reacted to form TiO₂ particles, or in one embodiment where at least 95% of the TiCl₄ has reacted to form TiO₂ particles.

18. The process of claim 11, wherein the amount of metal oxide precursor added downstream of the reaction zone produces TiO₂ with between about 1% to about 10% SiO₂ by weight of the TiO₂ product, or in one embodiment between about 1% to about 5% SiO₂ by weight of the TiO₂ product.

19. The process of claim 1, wherein the metal oxide coating is about 1 nm to about 10 nm thick, or in one embodiment about 2 nm to about 6 nm thick.

20. The process of claim 1, wherein the particle size of the TiO₂ particles is between about 100 nm to about 300 nm.

## Patentansprüche

1. Verfahren zur Herstellung von weitgehend anatasfreien Titandioxidteilchen mit einem einheitlichen homogenen Überzug aus einem Metalloxid auf ihrer Oberfläche, umfassend:
(a) das Eintragen von einem Titandioxid-Vorläufer und Sauerstoff in eine Reaktionszone eines Reaktors zur Herstellung von weitgehend anatasfreiem TiO₂, wobei sich die Reaktionszone bei einem Druck von mehr als 34,5 kPa (5 psig) bis etwa 689,5 kPa (100 psig) befindet; und
(b) das Inberührungbringen der weitgehend anatasfreien TiO₂-Teilchen mit einem homogen in eine Lösungsmittelkomponente eingemischten Metalloxid-Vorläufer hinter der Reaktionszone zur Bildung von beschichteten Titandioxidteilchen mit einem glatten, homogenen Metalloxidüberzug, wobei keine separaten Teilchen des Metalloxidüberzugs anfallen; und
(c) Isolieren der beschichteten ultrafeinen Titandioxidteilchen.

2. Verfahren nach Anspruch 1, bei dem man vor dem Eintragen des Titandioxid-Vorläufers und des Sauerstoffs in die Reaktionszone den Titandioxid-Vorläufer mit einer Silicumverbindung mischt, wobei man eine Mischung erhält.

3. Verfahren nach Anspruch 1, bei dem es sich bei dem Titandioxid-Vorläufer um Titantetrachlorid handelt.

4. Verfahren nach Anspruch 1, bei dem es sich bei dem weitgehend anatasfreien TiO₂ um mindestens 99,99%iges Rutil-TiO₂ handelt.

5. Verfahren nach Anspruch 1, bei dem der Reaktionszonendruck zwischen etwa 275,8 kPa (40 psig) und etwa 689,5 kPa (100 psig) oder in einer Ausführungsform zwischen etwa 275,8 kPa (40 psig) und etwa 482,6 kPa (70 psig) liegt.

6. Verfahren nach Anspruch 1, bei dem die Reaktionszone eine Temperatur zwischen etwa 850°C bis etwa 1600°C oder in einer Ausführungsform zwischen 1000°C bis etwa 1300°C aufweist oder die Reaktionszonentemperatur in einer Ausführungsform etwa 1200°C beträgt.

7. Verfahren nach Anspruch 2, bei dem es sich bei der Siliciumverbindung um Siliciumtetrachlorid handelt und die Menge des mit dem Titandioxid-Vorläufer gemischen Siliciumtetrachlorids TiO₂ mit zwischen etwa 0,05 bis etwa 0,5% SiO₂, bezogen auf das Gewicht des TiO₂-Produkts, produziert.

8. Verfahren nach Anspruch 1, bei dem man ferner vor dem Eintragen des Titandioxid-Vorläufers und des Sauerstoffs in die Reaktionszone dem Titandioxid-Vorläufer ein Aluminiumhalogenid zusetzt.

9. Verfahren nach Anspruch 1, bei dem die Reaktionszone mehrere Stufen aufweist.

10. Verfahren nach Anspruch 1, bei dem der Metalloxidüberzug ein Metalloxid aus der Gruppe bestehend aus SiO₂, Al₂O₃, B₂O₃, ZrO₂, GeO₂, MgO, ZnO und SnO₂ umfasst.

11. Verfahren nach Anspruch 10, bei dem es sich bei dem Metalloxid um SiO₂ handelt.

12. Verfahren nach Anspruch 1, bei dem man den Metalloxid-Vorläufer aus der Gruppe bestehend aus Siliciumhalogeniden, Hexaalkyldisiloxanen, Tetraalkylorthosiloxanen und Silanen auswählt.

13. Verfahren nach Anspruch 12, bei dem es sich bei dem Metalloxid-Vorläufer um ein Siliciumhalogenid handelt.

14. Verfahren nach Anspruch 2 oder 13, bei dem es sich bei der Siliciumverbindung von Anspruch 2 oder dem Metalloxid-Vorläufer von Anpruch 13 um ein Siliciumtetrachlorid handelt.

15. Verfahren nach Anspruch 1, bei dem man die Lösungsmittelkomponente aus der Gruppe bestehend aus einem flüssigen Halogenid, einem Halogenidgas, flüssigem Kohlendioxid, Kohlendioxidgas, Stickstoffgas und Argongas auswählt.

16. Verfahren nach Anspruch 15, bei dem es sich bei der Lösungsmittelkomponente um flüssiges Chlor handelt.

17. Verfahren nach Anspruch 1, bei dem das Inberührungbringen der TiO₂-Teilchen mit dem Metalloxid-Vorläufer an einem Punkt der Reaktionszone erfolgt, an dem mindestens 90% des TiCl₄ zu TiO₂-Teilchen abreagiert haben oder an dem in einer Ausführungsform mindestens 95% des TiCl₄ zu TiO₂-Teilchen abreagiert haben.

18. Verfahren nach Anspruch 11, bei dem die Menge des hinter der Reaktionszone zugesetzten Metalloxid-Vorläufers TiO₂ mit zwischen etwa 1 bis etwa 10% SiO₂, bezogen auf das Gewicht des TiO₂-Produkts, oder in einer Ausführungsform zwischen etwa 1 bis etwa 5% SiO₂, bezogen auf das Gewicht des TiO₂-Produkts, produziert.

19. Verfahren nach Anspruch 1, bei dem der Metalloxidüberzug etwa 1 nm bis etwa 10 nm dick oder in einer Ausführungsform etwa 2 nm bis etwa 6 nm dick ist.

20. Verfahren nach Anspruch 1, bei dem die Teilchengröße der TiO₂-Teilchen zwischen etwa 100 nm bis etwa 300 nm liegt.

## Revendications

1. Procédé pour la préparation de particules de dioxyde de titane sensiblement exempt d'anatase comportant un revêtement uniforme, homogène d'un oxyde métallique sur la surface des particules d'oxyde de titane, comprenant
(a) l'introduction d'un précurseur de dioxyde de titane et d'oxygène dans une zone réactionnelle d'un réacteur pour produire du TiO₂ sensiblement exempt d'anatase, la zone réactionnelle étant à une pression de plus de 34,5 kPa (5 psig) à environ 689,5 kPa (100 psig) ;
(b) la mise en contact des particules de TiO₂ sensiblement exempt d'anatase avec un précurseur d'oxyde métallique mélangé de façon homogène dans un composant solvant en aval de la zone réactionnelle pour former des particules de dioxyde de titane enrobées avec un revêtement d'oxyde métallique uniforme, homogène, des particules distinctes du revêtement d'oxyde métallique n'étant pas produites ; et
(c) isoler les particules d'oxyde de titane ultrafines enrobées.

2. Procédé selon la revendication 1, dans lequel le précurseur de dioxyde de titane est mélangé avec un composé de silicium pour former un mélange avant d'introduire le précurseur de dioxyde de titane et l'oxygène dans la zone réactionnelle.

3. Procédé selon la revendication 1, dans lequel le précurseur de dioxyde de titane est le tétrachlorure de titane.

4. Procédé selon la revendication 1, dans lequel le TiO₂ sensiblement exempt d'anatase est du TiO₂ rutile à au moins 99,9 %.

5. Procédé selon la revendication 1, dans lequel la pression de la zone réactionnelle se situe entre environ 275,8 kPa (40 psig) et environ 689,5 kPa (100 psig), ou dans un mode de réalisation entre environ 275,8 kPa (40 psig) et environ 482,6 kPa (70 psig).

6. Procédé selon la revendication 1, dans lequel la zone réactionnelle a une température comprise entre environ 850 °C et environ 1600 °C, ou dans un mode de réalisation entre 1000 °C et environ 1300 °C, ou dans lequel, dans un mode de réalisation, la température de la zone réactionnelle est d'environ 1200 °C.

7. Procédé selon la revendication 2, dans lequel le composé de silicium est le tétrachlorure de silicium et la quantité de tétrachlorure de silicium mélangée avec le précurseur de dioxyde de titane produit du TiO₂ avec entre environ 0,05 % et environ 0,5 % de SiO₂ en poids du produit TriO₂.

8. Procédé selon la revendication 1, comprenant en outre l'addition d'un halogénure d'aluminium au précurseur de dioxyde de titane avant d'introduire le précurseur de dioxyde de titane et l'oxygène dans la zone réactionnelle.

9. Procédé selon la revendication 1, dans lequel la zone réactionnelle comporte de multiples étages.

10. Procédé selon la revendication 1, dans lequel le revêtement d'oxyde métallique comprend un oxyde métallique choisi dans le groupe constitué par SiO₂, Al₂O₃, B₂O₃, ZrO₂, GeO₂, MgO, ZnO et SnO₂.

11. Procédé selon la revendication 10, dans lequel l'oxyde métallique est SiO₂.

12. Procédé selon la revendication 1, dans lequel le précurseur d'oxyde métallique est choisi dans le groupe constitué par les halogénures de silicium, les hexaalkyldisiloxanes, les orthosilicates de tétraalkyle et les silanes.

13. Procédé selon la revendication 12, dans lequel le précurseur d'oxyde métallique est un halogénure de silicium.

14. Procédé selon la revendication 2 ou 13, dans lequel ledit composé de silicium de la revendication 2 ou ledit précurseur d'oxyde métallique de la revendication 13 est le tétrachlorure de silicium.

15. Procédé selon la revendication 1, dans lequel le composant solvant est choisi dans le groupe constitué par un halogénure liquide, un halogénure gazeux, le dioxyde de carbone liquide, le dioxyde de carbone gazeux, l'azote gazeux et l'argon gazeux.

16. Procédé selon la revendication 15, dans lequel le composant solvant est le chlore liquide.

17. Procédé selon la revendication 1, dans lequel les particules de TiO₂ sont mises en contact avec le précurseur d'oxyde métallique en un point en aval de la zone réactionnelle où au moins 90 % du TiCl₄ a réagi pour former des particules de TiO₂, ou dans un mode de réalisation où au moins 95 % du TiCl₄ a réagi pour former des particules de TiO₂.

18. Procédé selon la revendication 11, dans lequel la quantité de précurseur d'oxyde métallique ajoutée en aval de la zone réactionnelle produit du TiO₂ avec entre environ 1 % et environ 10 % de SiO₂ en poids du produit TiO₂, ou dans un mode de réalisation entre environ 1 % et environ 5 % de SiO₂ en poids du produit TiO₂.

19. Procédé selon la revendication 1, dans lequel le revêtement d'oxyde métallique a une épaisseur d'environ 1 nm à environ 10 nm, ou dans un mode de réalisation une épaisseur d'environ 2 nm à environ 6 nm.

20. Procédé selon la revendication 1, dans lequel la taille des particules de TiO₂ se situe entre environ 100 nm et environ 300 nm.
